## Europäisches Patentamt
## European Patent Office
## Office européen des brevets

(19)

(11) Publication number: **0 136 910**

**A2**

(12)

# EUROPEAN PATENT APPLICATION

(21) Application number: **84306714.1**

(22) Date of filing: **02.10.84**

(51) Int. Cl.⁴: **B 62 D 53/02**
**B 62 D 49/06**

(30) Priority: **03.10.83 IE 2328/83**

(43) Date of publication of application:
**10.04.85 Bulletin 85/15**

(84) Designated Contracting States:
**AT BE CH DE FR GB IT LI LU NL SE**

(71) Applicant: **STANDISH LIMITED**
**Cumberland House Fenian Street**
**Dublin 2(IE)**

(72) Inventor: **Wilkinson, John C.S.**
**Rathbeggan House**
**Dunboyne, Co. Meath(IE)**

(74) Representative: **Ben-Nathan, Laurence Albert et al,**
**c/o MICHAEL BURNSIDE & PARTNERS 2 Serjeants' Inn**
**Fleet Street**
**London EC4Y 1HL(GB)**

(54) **Agricultural tractors.**

(57) In a tractor (1) having a frame (2, 3) and four wheels (20, 21, 50, 51), each wheel is driven by a hydrostatic motor (126, 128, 129, 127) and is mounted on an arm (23, 24, 53, 54) which is pivotable relative to the frame. The tractor has a power unit (111) which drives pumps (113, 114, 115, 145, 155) for supplying hydraulic fluid under pressure. Two (113, 114) of said pumps are drive pumps for supplying hydraulic fluid under pressure to respective pairs (126, 127 and 128, 129) of said wheel motors. A hydraulic piston and cylinder device (31, 32, 61, 62) is mounted between the frame and each of said pivotable arms (23, 24, 53, 54) on which the wheels are mounted. One of the cylinder and piston of each of the devices is associated with the frame and the other of the cylinder and piston of the device is associated with the respective pivotable arm. Pump (155) is an auxiliary pump selectively connectible to the piston and cylinder devices (31, 32, 61, 62) so that each device may be activated to pivot a respective arm (23, 24, 53, 54) relative to the frame independently of the supply of hydraulic fluid to the wheel motors (126, 128, 129, 127) and thus vary the disposition of the wheel (20, 21, 50, 51) mounted on the arm relative to the frame. The tractor may also incorporate a load-carrying platform (91) mounted on an extensible portion (45, 46) of the frame. The frame may have front and rear parts (2, 3) articulated together for relative rotation about substantially vertical (5) and substantially horizontal (6) axes.

FIG. 1

## AGRICULTURAL TRACTORS

This invention relates to agricultural tractors and in particular to agricultural tractors having a frame and three or more wheels.

Agricultural tractors are known in which an internal combustion engine drives a pair of rear wheels of large diameter through a mechanical transmission including a clutch and gear-box. Steering of such tractors is achieved by means of two front wheels of lesser diameter, using a steering linkage of the type widely employed in all kinds of automotive vehicles. Tractors of this kind have proved effective in service over a long period of years and are adaptable to many different purposes on the farm. There are however certain activities for which these known tractors are unsuitable, or where their use is disadvantageous.

One such circumstance is the spraying of growing crops. For this purpose, a ground clearance of up to approximately 1100 mm (3 feet 6 inches) is desirable. The ground clearance of conventional tractors is considerably greater than that of automotive vehicles for use on the public road, but nonetheless it is not generally sufficient for this spraying operation. Special kits are available for adapting a standard tractor to this use, but a tractor, when so adapted, is not readily reconvertible to normal use, and at least some such kits do not result in a structure of sufficient strength for reliable operation. In addition, the ground loading (i.e. the wheel pressure on the soil) may be unacceptably high with a converted unit of this kind.

A further disadvantage associated with conventional tractors when operating over growing crops is that the leading steered wheels and the rear drive wheels do not travel on the same track, at least during turning movements, so that when the tractor is turned about, for example at the end of a traverse of a field, to travel back across the field in the opposite direction, an unnecessarily large area of crop may be damaged or destroyed by the wheels running over it. A further problem may arise where a high torque is required, for example, to pull a heavy or highly resistant implement. In conventional tractors, such high torque may be developed by locking the differential. However in order to permit the tractor to turn at the end of a traverse across a field, this differential lock must generally be released, so leading to a loss of torque at a time when high torque may be particularly necessary, with consequent wheel slip and difficulties in getting restarted. A disadvantage which may arise from the conventional wheel arrangement of large driving wheels at the rear and small steered wheels at the front is excessively high ground loading, so that the tractor may sink into the soil to an unacceptable degree in bad conditions. In addition this wheel arrangement may lead to an unacceptable inequality of weight distribution as between front and rear wheels. Conventional tractors are also limited in their maximum speed of travel when operating on the public road, by virtue of their wheel arrangement and lack of springing. Conventional tractors are also not generally suited to or readily adaptable for the carriage of any significant load, at least over any substantial distance. Load-carrying attachments, where fitted, are frequently disposed at the rear of the tractor, so that the load is cantilevered outwardly from the rear, thereby limiting the weight which can be lifted as well as possibly also exacerbating the wheel loading problem noted above. In addition an excessive cantilevered load at the rear may lead to loss of steering capability at the front wheels. The use of a front lifting attachment may result in better distribution of the weight of the load as between the front and rear wheels, but the increased loading on the steered smaller diameter front wheels may then be unacceptable.

It is an object of the invention to provide a tractor which will overcome at least some of the foregoing disadvantages. It is a particular object of the invention to provide a multi-purpose tractor, the ground clearance of which may readily be adjusted during use of the tractor, so that it may operate when required over tall growing crops without having to stop for the attachment of special fittings. It is a further object of the invention to provide a tractor which will substantially minimise the destruction of a growing crop caused by tractor wheels running over the crop. It is also an object of the invention to provide a tractor, the torque on the driving wheels of which may be maintained at substantially a maximum during turning movements. Yet another object of the invention is to provide a tractor having relatively low wheel loading. Further objects of the invention include the provision of a tractor in which the loading on each wheel may be substantially equalised and the provision of a tractor which may be used on public roads at relatively high travel speeds. It is a further particular object of the invention to provide a tractor suitable for or adaptable to the carriage of a load, the centre of gravity of such load being disposable within, or not significantly outboard of, the wheelbase of the vehicle.

According to the invention, there is provided a tractor having a frame and three or more wheels, each wheel being driven by a hydrostatic motor and being mounted on an arm which is pivotable relative to the frame, the tractor having a power unit driving two or more pumps for supplying hydraulic fluid under pressure, at least one of said pumps being a drive pump for supplying hydraulic fluid under pressure to two of said wheel motors in parallel, a hydraulic piston and cylinder device being mounted between the frame and each of said pivotable arms on which the wheels are mounted, one of the cylinder and piston of said device being associated with the .frame and the other of the cylinder and piston of the device being associated with said pivotable arm, and another of said pumps being an auxiliary pump selectively connectible to said piston and cylinder devices so that each said device may be activated to pivot a respective said arm relative to the frame independently of the supply of hydraulic fluid to said wheel motors and thus vary the disposition of the wheel mounted on said arm relative to the frame. Accordingly the clearance between a surface on which the tractor is standing or travelling and the frame or frame-mounted equipment may be adjusted both while the tractor is stationary and also while it is in motion.

Each of the hydraulic piston and cylinder devices most suitably includes a hydraulic lock so that it may maintain the associated wheel in a selected disposition relative to the frame without the supply of hydraulic fluid under pressure having to be maintained for this purpose. In a preferred embodiment each of the pivotable arms extends from the frame in the same direction relative to the direction of travel of the tractor and the dimension between the point of pivoting of the arm relative to the frame and the axis of the wheel mounted on said arm is the same for each arm, so that the tractor wheelbase may remain substantially constant when each arm is in the same pivoted disposition relative to the frame.

Preferably each pivotable arm is mounted on a mounting member displaceable relative to the frame in a direction substantially parallel to the axis of rotation of the wheel mounted on said arm, and means are provided for locating the mounting member in a selected one of a plurality of positions relative to the frame and substantially locking the member in said position relative to the frame so that when thus locked it cannot be further displaced relative to the frame without releasing said means. In an especially favoured construction, each arm is pivotably mounted in a mounting block or shoe which is displaceable relative to the frame in a direction substantially parallel to the axis of the respective wheel. In an especially preferred construction, the mounting block or shoe is provided with a rectangular opening in which a box section member of the frame is slidably received. The mounting block or shoe is slidable along this frame member within predetermined limits, and may be located in a particular disposition relative to the frame member, for example, by means of a pin engaging in mutually aligned holes in the walls of the mounting block or shoe and the box section member. In order to prevent any relative displacement between the shoes and the box section frame members on which they slide, which might arise as a result of the necessary tolerance provided between these components to allow the sliding shoe position adjustment, clamping means may also be provided to lock each shoe firmly against or with respect to the cooperating box section member when the shoe is located for example, by a pin, in a particular disposition relative to the frame. In one arrangement, this clamping action may be achieved by the shoe including a split housing surrounding the box section member, the housing being tightened up when the shoe is in the desired position and freed during lateral adjustment. This sliding and locking arrangement for the shoes allows alteration of the spacing between wheels on opposite sides of the tractor, so that the track width of the tractor can be altered in a relatively convenient manner.

Preferably conventional tractor wheels are employed, in which a further adjustment of the wheel track may be obtained by altering the disposition of the wheel rim relative to the hub. This is readily achieved in known manner by means of a dished wheel centre which bridges the space between the hub and the rim and is releasably secured to both hub and rim but which may be associated with the hub and the rim in a variety of differing orientations.

In a favoured construction of the tractor of the invention, a valve is provided for directing hydraulic fluid from a high pressure supply line supplying said two motors in parallel to a reservoir for hydraulic fluid in the event of a speed difference between the motors or an excess hydraulic fluid pressure. In this way a differential effect may be achieved between wheels on opposite sides of the tractor so that the torque of each motor may be maintained at its maximum possible value even during turning movements. In a particular construction, the tractor has four wheels and two drive pumps, each drive pump supplying hydraulic fluid to two of said wheel motors in parallel, one of the two wheels driven by said two wheel motors in parallel being a front wheel considered relative to the normal direction of travel of the tractor and the other of said wheels similarly considered being a rear wheel. In addition each wheel may have braking means and individual control means may be provided for each said braking means so that the braking force applied to each wheel may be controlled independently of the braking forces applied to others of the wheels, so that any tendency of an individual wheel to slip may be readily curtailed by braking that wheel without affecting any of the other wheels.

Variable displacement hydrostatic motors are preferably employed in the tractor of the invention. The displacement of the pistons of each hydrostatic motor during operation may be selected to have either a large value or a small value, thus effectively allowing the selection of a "high" or "low" gear ratio for each motor. The displacement of each motor may be varied by the application of a trigger signal to it, and such trigger signals are preferably applied to the front wheel motors as a pair and separately to the rear wheel motors as a second pair.

Both the hydraulic drive and the wheel disposition adjustment for ground clearance are preferably controlled from a single console mounted for rotational displacement through at least 180° about a substantially vertical axis. Preferably the driver's seat is associated with the console on a single turntable mounting so that it moves with the console, thus providing good driver supervision of both tractor movement and the operation of ancillary equipment.

A single valve means at said console is most suitably provided for simultaneously connecting said auxiliary pump to all of said piston and cylinder devices so that all of said arms are pivoted at the same time.

In an especially advantageous construction of the tractor of the invention, the tractor has a two-part frame having front and rear parts, the frame being articulated for relative rotation between the front frame part and the rear frame part about a substantially vertical axis, and at least one hydraulic piston and cylinder device is mounted between said front and rear frame parts, the cylinder portion of said device being associated with one of said frame parts and the piston portion of the device being associated with the other frame part so that said device may be activated to pivot one frame part relative to the other and constrain the wheel or wheels of the one frame part to follow an instantaneous path differing from that or those of the other frame part.

In this way, the tractor including this feature of the invention may readily be steered by relative rotational displacement of the articulated-together frame parts. In the case of a four wheeled tractor on level ground, the axes of the front and rear wheels are accordingly displaced into a non-parallel condition in a substantially horizontal plane during a steering movement. In a particularly preferred construction of the tractor of the invention, the steering of the tractor is also controlled from the turntable-mounted console.

Preferably the frame parts are also relatively rotatable at least within predetermined limits about a substantially horizontal axis extending substantially in the direction of travelling movement of the tractor, so that relative twisting of the frame parts is possible. Thus in the case of a four wheel tractor, operation over uneven ground may be facilitated by twisting displacement of the axis of the front wheels relative to that of the rear wheels. Accordingly when the tractor comprising this feature of the invention is travelling over uneven ground in a straight line without any steering movement taking place, the axes of the front and rear wheels are displaced into a non-parallel relative disposition in respective vertical planes by this twisting of the articulated frame. The continuous contact of all wheels with the ground in conjunction with the use of tyres of suitable dimensions enables wheel loading to be kept at a moderate level and the imposition of high ground loads due to sudden weight transfer between wheels on rough ground to be largely avoided. The articulated construction enables especially good tracking of the front and rear wheels to be achieved, particularly in a construction where the axes of the front and rear wheels are substantially equidistant from the vertical axis of relative rotation of said frame parts in at least one pivoted disposition of the wheel support arms.

At least a substantial portion of the frame of the tractor of the invention is defined by frame members of substantially box section, so that an especially light construction may be achieved. By appropriate disposition of the various component units and attachment points for ancillary equipment, good weight distribution may be achieved under substantially all operating conditions. This particularly preferred construction of the tractor of the invention may be provided with four wheels, all of the same size.

According to a further feature of the invention, the tractor of the invention may comprise load-carrying means delimiting at least in part a load-accommodating space or volume, the load-carrying means being mounted on a portion of the frame and said frame portion being displaceable relative to a wheel-supporting part of the frame so that said load-accommodating space or volume may be varied in size. Said space or volume may accordingly be selected to allow the particular load to be carried to be disposed as far inboard of the tractor as its size allows. The load accommodating space or volume may be located on or above the load-carrying means, said means then defining or delimiting a lower boundary of said space or volume, above or on which a load may be received. The load-carrying means is most suitably a platform, which may be mounted above a wheel or wheels of the tractor, the platform being disposed relative to the wheels of the vehicle so that the centre of gravity of a load carried on the platform may be positioned at a location not significantly outboard of the vehicle wheelbase. Preferably the displaceability of said frame portion permits disposition of the centre of gravity of a load at a location substantially coincident with or inboard of the axis of at least one wheel of the vehicle.

In an especially preferred construction of the tractor of the invention, the displaceable portion of the frame is most suitably a section of one of the articulated frame parts and this section is preferably telescopically slidable relative to the remainder of the frame part substantially in the direction of travel of the vehicle. Means such as clamping bolts may be provided for locking the telescopic portion relative to the remainder of the frame part in a selected relative disposition. In an especially preferred embodiment of the tractor of the invention, the displaceable frame portion is a telescopic section of the rear frame part.

Preferably telescopic extension of the frame part is maintained at the minimum value consistent with providing sufficient carrying space or volume on or above the platform for at least a load of relatively high density, so that the centre of gravity of any load accommodated on the platform will be as far inboard of the tractor as possible, and preferably substantially within the wheelbase of the vehicle, at least in the raised or minimum ground clearance disposition of the tractor wheels. For loads of lesser density or greater bulk, the telescopic section may be extended to provide sufficient load-carrying space on or above the platform. The platform or other load-carrying means may also be telescopic or extensible if required.

The tractor according to the invention, especially in the particularly preferred construction last-mentioned above, is also especially suitable for use as a tool carrier, and may be provided as required with such tools as buckets, forks or bale spikes, and so on, as well as such ancillary equipment as fertiliser spreaders, spray units and mowing or other crop treating equipment. The hydrostatic drive allows the machine to travel at speed on public roads, for ease of transfer between working locations.

An embodiment of the invention will now be described having regard to the accompanying drawings in which:-

Figure 1 is a side view of a tractor according to the invention in a lowered configuration;

Figure 2 is a side view of the tractor of Figure 1 in a raised configuration;

Figure 3 is a pictorial view of the front frame of the tractor of Figures 1 and 2;

Figure 4 is a pictorial view of the rear frame of the tractor of Figures 1 and 2;

Figure 5 is a schematic diagram showing the kinematic relationship between the wheels and the frames of the tractor
of Figures 1 and 2 for ground clearance adjustment;

Figure 6 is a schematic diagram showing the relative
dispositions of the wheels and frames of the tractor of Figures
1 and 2, for a narrow wheel track;

Figure 7 is a schematic diagram similar to Figure 6
showing the relative dispositions of the wheels and frames for
a wide wheel track;

Figure 8 is a schematic diametrical section through a
wheel of the tractor of Figures 1 and 2, showing the
relationship between the wheel hub and rim and how this may be
altered to vary the wheel track;

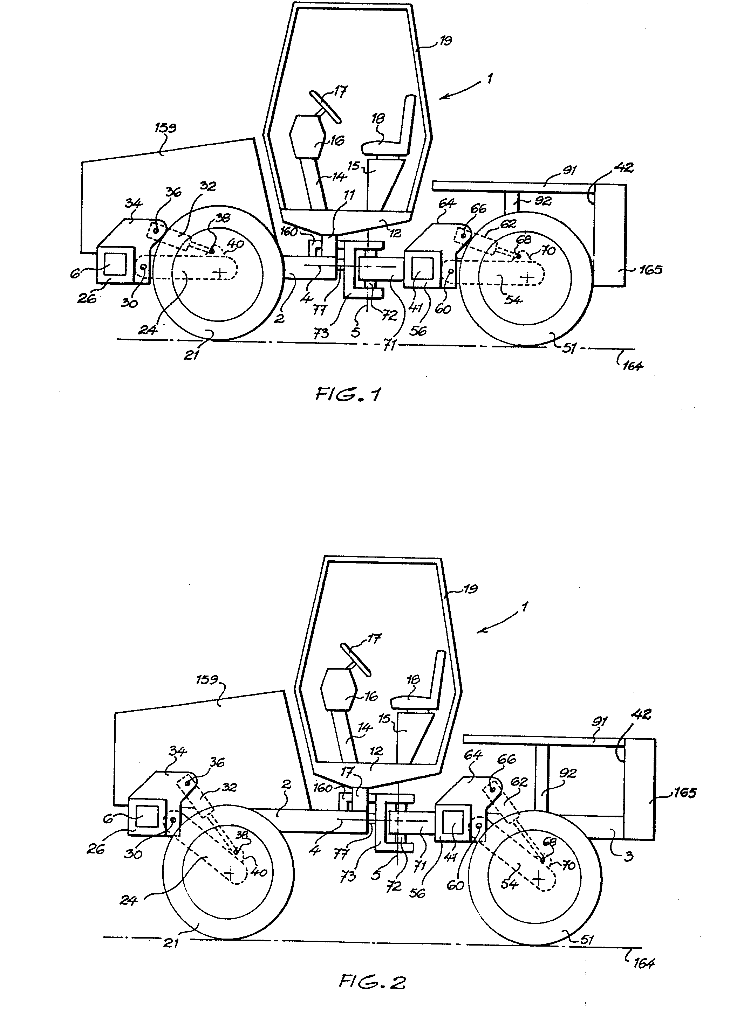

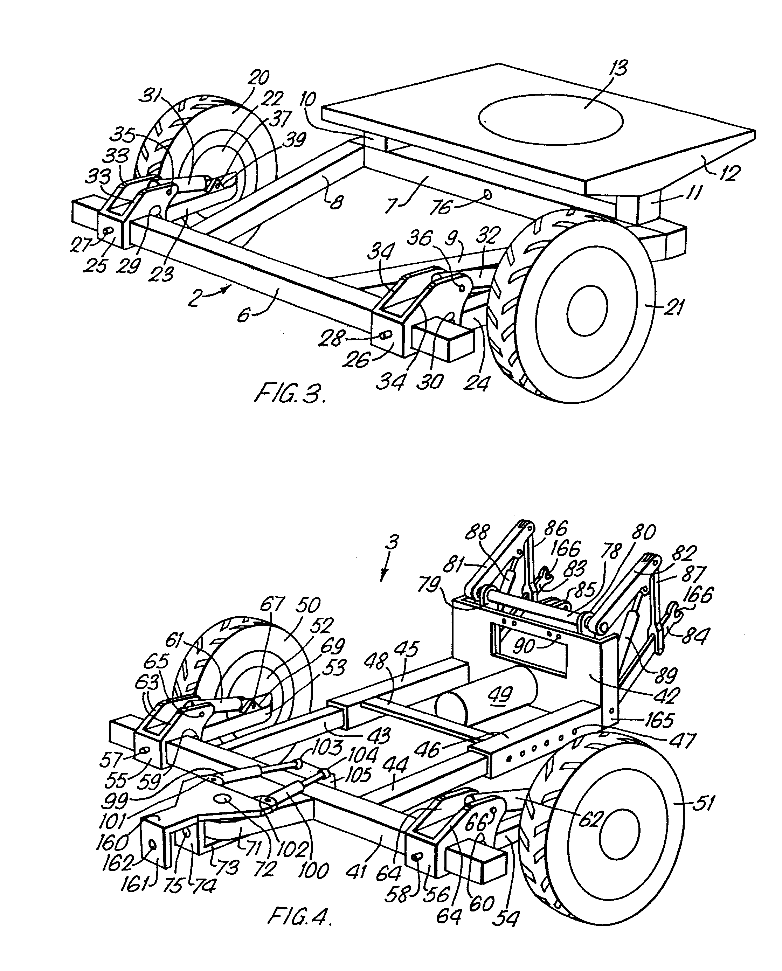

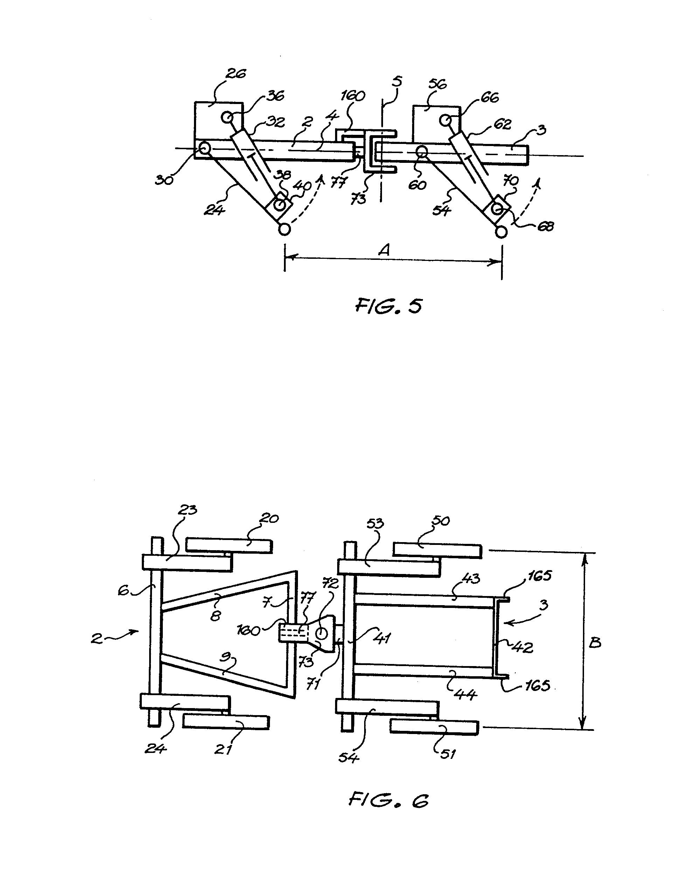

Figure 9 is a schematic diagram showing the relative
dispositions of the front and rear frames of the tractor of
Figures 1 and 2 when following a curved path;

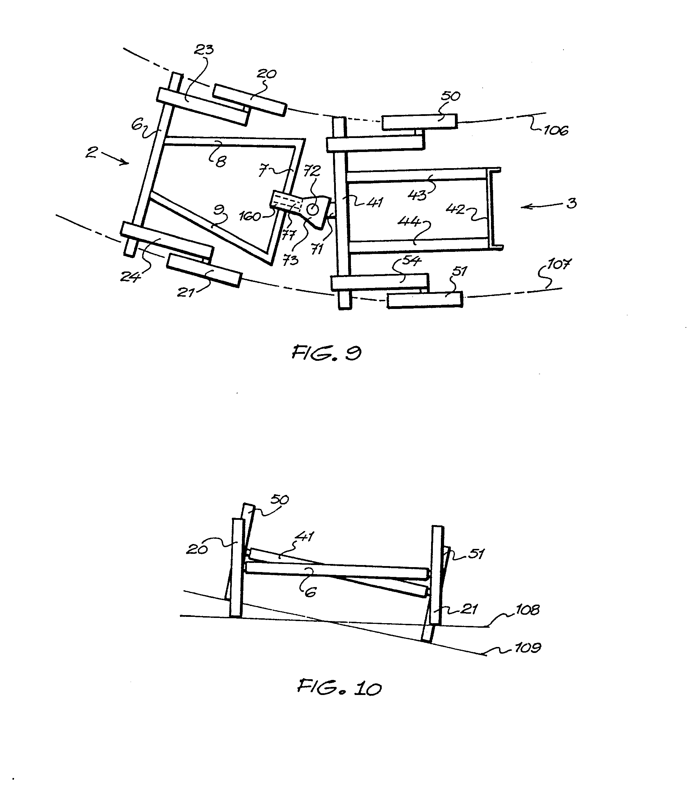

Figure 10 is a schematic front view of the frames of the
tractor of Figures 1 and 2, showing the relative dispositions
of the front and rear frames when travelling over uneven
ground; and

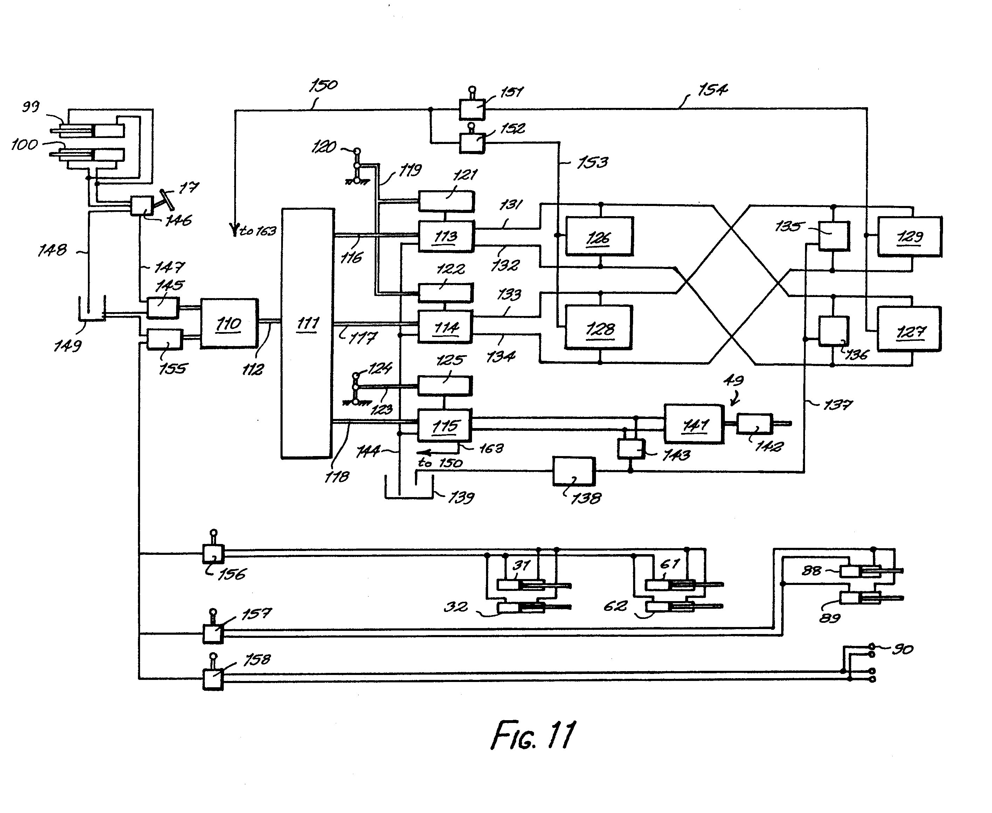

Figure 11 is a schematic diagram of the hydraulic circuitry of
the tractor of Figures 1 and 2.

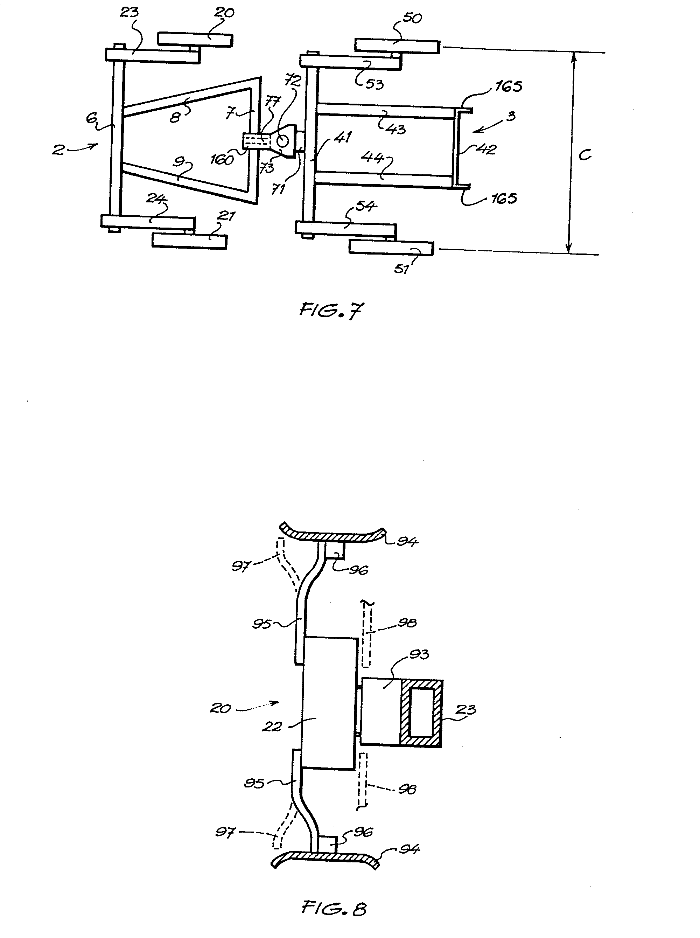

As shown in Figures 1 and 2, a tractor 1 according to the
invention has a front frame 2 and a rear frame 3, these frames
being illustrated in greater detail in Figures 3 and 4, to
which reference is also directed. The front and rear frames
are articulated together substantially centrally in the
tractor, for relative rotation about a substantially vertical
axis 5 for steering the tractor during a travelling movement,
and also for relative rotation about a substantially horizontal
axis 4 so that the front frame may twist relative to the rear
frame. These front and rear frames 2 and 3 substantially
constitute respective frame parts of the frame of the tractor
1.

As shown in Figure 3 in particular, the front frame 2 has a front transverse frame member 6 and a rear frame member 7 extending substantially parallel to the front member 6. Both the front and rear frame members are formed from hollow box section material, suitably steel. Lateral frame members 8 and 9 extend between the front and rear members 6 and 7 and are also of hollow box section. The front ends of the side members 8 and 9, which are welded to the transverse member 6, are closer together than the rear ends of the side members, which are welded to transverse member 7. Accordingly the front frame is substantially trapezoidal in plan view, as may been seen in Figure 6 in particular. The front transverse member 6 is longer than the spacing between the front ends of side members 8 and 9 and the outer ends of the transverse frame member 6 are accordingly cantilevered outwardly from the boundaries of the trapezoid defined by members 7, 8, 9, and the central portion of member 6.

Upstanding pillars 10 and 11 are provided at the opposite ends of transverse member 7 of frame 2, a short distance inboard of the outer ends of this transverse member. Mounted on top of these pillars and extending over substantially the entire width of the frame and also some distance forwardly and rearwardly of the pillars 10 and 11, is a cab base 12. The base 12 is of hollow construction, and its upper surface is provided with a turntable 13, or which a console column 14 and a seat support 15 are mounted. A control console 16 is provided at the upper end of the column 14 and also carries the steering wheel 17 for the tractor. A driver's seat 18 is provided on the seat support 15. A protective frame 19 covers over the driving position and may be sheathed with metal and transparent material to define a driver's cab. Control cables and, in certain instances, also hydraulic control hoses, are carried from the console 16 through the column 14, to the underside of the turntable 12, from where they extend to the various units of the tractor such as the engine and hydraulic rams. Rotation of the turntable is normally limited to 180°. In one extreme position the driver faces forwardly towards the engine cover 159, and in the other extreme position he faces directly rearwardly of the tractor. In an intermediate position the driver faces at right angles to the direction of travel of the tractor, and hose and other control connections are made when the turntable is in this orientation, so that twisting of these items is limited to that generated by a 90° movement of the turntable to either of its extreme positions. Rotation beyond 180° may of course be provided for by appropriate arrangement of the control connections while full circle rotation through and beyond 360° may be achieved by the provision of slip rings and rotating seals for the control connections.

As shown in Figure 3 in particular, the front wheels 20 and 21 of the tractor are mounted on the front frame 2. Each wheel accommodates a hydrostatic motor, within a motor housing, indicated for wheel 20 by the reference numeral 22. Wheels 20 and 21 are rotatably mounted on the free ends of wheel support arms 23 and 24, which are respectively pivoted on slidable wheel arm mounting blocks or shoes 25 and 26. These shoes have rectangular openings in them of a size which will accept the box section rectangular frame member 6, and they are mounted on the outer cantilevered ends of the member 6 so as to be slidable along these outer ends in a direction substantially parallel to the axis of rotation of the wheels. Each mounting block or shoe 25 and 26 is located in a selected position along the length of the member 6 by means of a locating pin 27 or 28 respectively, which engages in mutually aligned holes in the wall of the mounting block 25 or 26 and the wall of the box section frame member 6. By sliding the mounting blocks or shoes inwardly or outwardly along the frame member 6, and locating them appropriately by the pins 27 and 28, the transverse spacing of the wheels 20 and 21 may be varied, as subsequently described with reference to a later figure. As shown in Figure 3, the pins 27 and 28 are substantially horizontal but they may alternatively be arranged to drop vertically into aligned holes extending through those portions of the shoes and transverse member 6 defining their respective upper surfaces. In addition, in order to ensure that the necessary clearance between the rectangular holes through the shoes and the box section member 6 on which the shoes are disposed, which clearance is required in order to permit sliding adjustment of the shoes along the member, does not result in unwanted and undesirable relative displacement between the shoes and the box section member when the shoes are located on the member in a particular selected position, which displacement might lead to wear and an undue enlargement of the clearance or tolerance between these components, clamping means are provided for locking each shoe substantially fixedly relative to the box section member 6, when the shoe is in a selected position determined by engagement of a locating pin 27 or 28 in the aligned holes of the shoe and member 6. This locking or clamping may be achieved by each shoe including or comprising a split housing which is released for track width adjustment and tightened up when the shoe has been located in the desired position.

The arms 23 and 24 are pivoted in the blocks or shoes 25 and 26 by means of pins 29 and 30 respectively. Rotation of the arms 23 and 24 about these pivot pins is achieved by means of hydraulic piston and cylinder devices or rams 31 and 32 respectively. Each shoe 25 and 26 has a respective pair of lug portions, indicated by reference numeral 33 for shoe 25 and numeral 34 for shoe 26, which extend upwardly and away from the shoe portions in which the pivot pins 29 and 30 are respectively accommodated. The cylinders of the rams 31 and 32 are pivotably received between the lug portions 33 or 34 at pivot points indicated by references 35 and 36 respectively, and the pistons of the rams are pivoted by means of pins 37 and 38 in lugs 39 and 40 of the arms 23 and 24, adjacent to the ends of the arms at which the wheels 20 and 21 are mounted. In

Figures 1 to 4, the wheel mounting and frame articulation components are shown to some degree schematically and greater than actual size in order to facilitate understanding of the invention.

The kinematic result achieved is shown most clearly in Figure 5. By extension or contraction of the hydraulic rams 31 and 32, the wheels 20 and 21 may be raised or lowered relative to the frame 2, so that the clearance between the underside of the frame and the ground surface on which the tractor is to travel may be varied. When the wheels are in their uppermost positions, the arms 23 and 24 extend rearwardly from the transverse frame member 6 in a direction substantially parallel to the general plane of the frame 2. In this condition, a ground clearance of approximately 450 mm (18 inches) is provided. When the rams are fully extended, the ground clearance may be increased to a value of about 1100 mm (3 feet 6 inches), thus allowing the tractor to travel over a tall growing crop such as wheat, for purposes such as spraying the crop with a chemical compound. Figures 1 and 2 show the tractor in raised (Figure 2) and lowered (Figure 1) dispositions relative to the ground surface 164.

The rear part 3 of the articulated tractor frame is shown in detail in Figure 4. It is broadly similar in construction to the front frame, in that a front transverse member 41 of hollow box section has cantilevered outer ends, on which wheel arm mounting blocks or shoes 55 and 56 are laterally slidable. However the shape of the frame differs from that of the front frame, the rear of the frame being defined by a transverse upstanding plate 42, which has short rearwardly extending lateral flanges 165, while side members 43 and 44, the front ends of which are welded to the transverse member 41, extend rearwardly from the front member 41 substantially parallel to each other. The members 43 and 44 do not extend to the rear plate 42, but have free ends which are received within sliding further side members 45 and 46, also of hollow box section, which fit over the outer ends of the members 43 and 44 in a substantially telescopic manner and are welded to plate 42 at their rear ends. The spacing between the front member 41 and the rear plate 42 may thus be varied by telescopically sliding the members 45 and 46 relative to members 43 and 44 and these relatively displaceable members are locked together in a selected relative disposition by inserting a bolt or locking pin through aligned pairs of locking holes 47 passing through the walls of the respective members. A transverse strengthener 48 extends between members 45 and 46, immediately rearward of their inner or free ends within which the members 43 and 44 are received. A hydrostatic drive unit 49 is mounted on the inner side of rear plate 42 and is subsequently described in more detail.

Referring again to Figures 1 and 2, a load-carrying platform 91 is located above the space between the rear of the cab or driving position and the plate 42 at the rear end of the rear frame 3 and is supported on members 45 and 46 by uprights 92. This platform 91 may be used to carry materials for use with ancillary equipment mounted for example at the rear of the tractor or it may alternatively be used for general carrying purposes about the farm. It may for example accommodate a spray tank or a bin for powdered fertiliser. The dimensions of the various members 43, 44, 45 and 46 are such that even in the longest extended configuration of the frame part 3, in which the members 45 and 46 are moved out telescopically in a direction away from the member 41 at the front of the frame part, to their most extreme positions, the centre of gravity of a load accommodated on the platform 91 may be located not significantly outboard of and preferably substantially within the wheelbase of the vehicle, regardless of the bulk of the load. This telescopic feature allows the platform space to be expanded to accommodate a large-volume, low density load, while in the contracted arrangement or configuration of the load-carrying platform 91, the tractor may support a more concentrated load on the platform 91. In this contracted configuration, the centre of gravity of the load will be significantly inboard of the wheelbase, thus ensuring acceptable distribution of the weight of the load between the wheels of the tractor and avoiding the undesirable outwardly cantilevered situation of a rear-mounted load on a conventional tractor.

The mounting of the rear wheels 50 and 51 is substantially similar to the arrangement already described for the front wheels. Each wheel is provided with a hydrostatic motor, housed within a cover indicated by reference numeral 52 for motor 50. Each wheel is mounted on a wheel support arm 53 or 54, and each arm is pivotably mounted on a mounting block or shoe 55 or 56 by means of a pivot pin 59 or 60. The transversely slidable shoes are located with respect to the box section transverse member 41 by means of pins 57 and 58 respectively and may be locked in position by suitable clamping means. The ground clearance is varied by pivoting arms 53 and 54, and hydraulic rams 61 and 62 mounted between shoe lug portions 63 and 64 and arm lugs 69 and 70 by means of cylinder pivots 65 and 66 and piston pivots 67 and 68 respectively serve to rotate the arms 53 and 54 for this purpose. The spacing between the axes of rotation of the rear wheels 50 and 51 and the axes of pivoting of the arms 53 and 54 relative to the frame, as defined by the pivot pins 59 and 60, is the same as the spacing between the axes of the front wheels 20 and 21 and the corresponding axes of pivoting of the front wheel support arms 24 and 24 relative to the frame defined by pivot pins 29 and 30.

In order to couple the articulated frames together a vertical axis bearing member 71 extends forwardly from the front transverse member 41 of the rear frame 3 and, at its leading end, member 71 accommodates, in a suitably sized hole, the central section of a vertical axis pivot pin 72. The outer ends of pin 72 are accommodated in respective upper and lower portions of a jaw member 73, these upper and lower jaw portions embracing the forward end of member 71. A bridge portion 74 extends vertically between the upper and lower jaw portions forwardly of the bearing member 71, and is provided with a horizontally extending hole 75 for receiving one end portion of a horizontal bearing pin 77. The upper limb of the jaw member 73 is also extended forwardly of bridge portion 74, this forward extension being indicated by reference numeral 160, and at its leading end, forward extension 160 is welded to a downwardly extending limb 161. Bridge portion 74, extension 160 and limb 161 together define a further jaw portion, of substantially inverted U-shape, of member 73. In the assembled tractor, this substantially vertically extending and downwardly directed jaw or jaw portion of the double-jaw member 73 embraces the transverse rear member 7 of the front frame section 2 from above. Limb 161 is provided with a further horizontally extending hole 162 for accommodating the other end portion of the horizontal bearing pin 77. The central portion of this pin is then received in a hole 76 passing through the rear frame member 7 of frame part 2. Accordingly as in the case of the vertical pin 72, pin 77 is positively supported at its outer ends and thus substantially protected against the application of excessive bending moments.

The various member portions through which the pins pass are preferably provided with bushes so that relative rotation between the pins and any of their supporting parts may readily take place. Alternatively the pins may be non-rotatably secured to one of the relatively rotatable parts in which they are accommodated and rotatably bushed in the other. In either event, bushing serves to reduce wear and facilitate maintenance of the bearings. The bushes may be of the tapered adjustable type so that such wear as does take place may be taken up.

It will be seen that the provision of these two bearing pins 72 and 77, disposed at right angles to each other, permits relative movement between the front and rear frames with two degrees of freedom. Relative rotation of the frames about the substantially vertical axis 5 allows the tractor to be steered, while relative rotation about the substantially horizontal axis 4 allows twisting between the front and rear parts, so as to cope with uneven ground surfaces. Suitable stop members, for example, rubber bearing blocks, are provided to limit this twisting movement to an appropriate extent. The tractor is steered by displacing the rear frame 3 relative to the front frame 2 about vertical axis 5 by means of double acting steering rams 99 and 100, extending between the upper portion of this substantially vertically extending and downwardly directed jaw or jaw portion of the double-jaw member 73 and a steering force receiving member 105, welded to the rear side of rear frame front transverse member 41. The cylinders of the rams 99 and 100 are pivotably mounted for both lateral relative displacement of the frame parts 2 and 3 and also for limited relative twisting displacement of these parts in lugs 101 and 102 on the rear of the upper portion of jaw member 73, while the pistons of these rams are similarly accommodated in mountings 103 and 104 on the receiving member 105. Accordingly the tractor may be steered, regardless of the degree of twist which prevails between the front and rear frames.

Figure 4 also shows the three point linkage arrangement at the rear of the rear frame 3. A horizontal shaft 78 extends transversely at a small spacing above the top of plate 42 and is supported on upwardly extending shaft mounts 79 and 80, lower portions of which are affixed such as by welding to plate 42. Upper pivot arms 81 and 82 extend rearwardly from the laterally outer ends of shaft 78. Lower or linkage arms 83 and 84 are pivoted at their inner ends between the flanges 165 of plate 42 and the lower ends of shaft mounts 79 and 80, which extend downwardly to the lower edge of plate 42. The outer ends of arms 83 and 84 are provided with standard coupling jaws 166, for attaching a variety of ancillary equipment. The third linkage point is indicated by reference number 85 and is disposed centrally of shaft 78. Hang links 86 and 87 support linkage arms 83 and 84 from the outer ends of the upper pivot arms 81 and 82. Hydraulic rams 88 and 89 serve to raise and lower the arms 83 and 84 in use of the linkage. The cylinder ends of the rams are pivoted to plate 42 near the pivot points of the linkage arms 83 and 84 and their pistons are pivoted to the upper pivot arms 81 and 82 near the pivot points of hang links 86 and 87 at the outer ends of arms 81 and 82. Operation of this three point linkage is entirely conventional.

Near the upper end of plate 42, a number of external service quick connection points 90 are provided. The hydraulic hoses extending from these points and also from the other hydraulic equipment, i.e. rams, motors etc., to the control valves and hydraulic pumps are not shown, as they may follow any of a large number of routings, but the hydraulic circuitry is shown schematically in Figure 11, to be described subsequently.

The kinematic relationship shown in Figure 5 has already been discussed in regard to the front wheels 20 and 21, but the same description also applies to the rear wheels 50 and 51. It will also be clear from Figure 5 that the wheel base A between the front and rear wheels in the direction of travel of the tractor when their axes are parallel will remain unchanged regardless of the ground clearance, provided that each arm 23, 24, 53 and 54 is pivoted to the same extent, since these arms trail with respect to the direction of forward motion of the tractor and are of the same dimensions between their pivot pins and respective wheel axes. Activation of all four rams 31 and 32 and 61 and 62 takes place by means of a single control valve, so that all four rams extend and contract simultaneously. The rams are set so that each arm is rotated to the same degree during operation of the control valve, and accordingly each wheel is in the same relative disposition with respect to the frame. Accordingly the ground clearance between the surface engaged by each wheel and the underside of the tractor frame is also the same for each wheel.

The ground clearance or tractor height control valve is most suitably activated by and associated with a rocker switch, which is displaced in one direction to raise the tractor and in the other direction to lower it. The switch is biassed towards a mid-position in which no upward or lowering movement takes place and to which it returns when released. The rams are preferably hydraulically locked at the selected ground clearance value when the rocker switch is in its mid-position. This selected ground clearance may be one of the extremes of height adjustment or any intermediate value. When it is desired to contract the rams so as to lower the tractor body and reduce the ground clearance, the hydraulic control system is arranged to apply a brief pressure pulse to the rams, which tends to raise the tractor slightly by expanding the rams and thereby releases the hydraulic locks, so that the rams may then contract. For increasing the ground clearance, a continuous expanding action of the rams takes place, which automatically overcomes and releases the hydraulic locks. For road travel, the rams may also be associated with or include hydraulic accumulators, which fulfil a shock absorbing function and allow comfortable operation at relatively high speeds. Provision may also be made to isolate such accumulators for field use. Alternatively the frame end pivots 35, 36, 65, 66 of the arms may be mounted in rubber or coil springs, to provide an additional resilience in the suspension for road use.

Figures 6 and 7 show respectively, the wheels 20 and 21 and 50 and 51 set for narrow (Fig. 6) and wide (Fig. 7) tracks. The narrow track is indicated in Figure 6 by reference B, and the wide track in Figure 7 by reference C. The track width may be set rapidly by means of the sliding mounting blocks or shoes 25 and 26 and 55 and 56 to suit the drill spacing in whatever field the tractor is currently working. This lateral sliding adjustment of the mounting blocks may be carried out actually in the field, for example, by supporting the outboard ends of frame member 6 or 41 as appropriate on stands or the like, and then contracting the rams 31 and 32 or 61 and 62 so that the relevant pair of wheels is swung upwardly out of contact with the ground, while the weight of the tractor normally carried by these wheels is taken by the stands or supports. With the wheels thus out of contact with the ground, the shoes 25 and 26 or 55 and 56 may then be readily displaced laterally along the member 6 or 41 to new positions corresponding to the track width desired for the wheels. Each mounting block or shoe may be displaced between extreme positions 6 inches apart so that up to 12 inches track adjustment is possible by this means.

A further 12 inches of track adjustment is available for each pair of wheels by conventional means on the actual tractor wheels. The arrangement is shown in Figure 8. The drawing shows in section arm 23 and also the end 93 of the arm on which wheel 20 is rotatably mounted. As shown the arm 23 is cranked outwardly at the end 93, in order to accommodate the wheel. The hydrostatic motor is housed within cover or hub 22, and the wheel rim 94 is mounted on the hub by means of a dished wheel centre 95, which is bolted to the hub and to mounting lugs 96 spaced around the inner periphery of the rim 94. As shown in Figure 8, the dishing of the centre 95 is directed concavely inwardly of the tractor, and outer peripheral connecting points of the centre 95 are bolted to the outer sides of the lugs 96. Alternatively the connecting points of the centre 95 may be bolted to the inner sides of the lugs 96, in which case the relative disposition of the rim and hub is altered and the track narrowed. A further alternative is to turn the centre around so that it is concave outwards, as indicated in dashed outline by numeral 97, which will result in a wider track. However, it is preferred to have the centre 95 in a concave inwards disposition to protect the hydrostatic motor from dirt and damage. Yet another alternative is to mount the centre 95 inboard of the hub 22, as indicated in dashed outline by reference numeral 98. In this way, a large number of relative dispositions of rim and hub are possible, providing further track settings between limits approximately 12 inches apart. Accordingly, by virtue of the sliding block mounting and the variable disposition of the wheel rims and hubs, an overall track adjustment of up to 24 inches is possible for each pair of wheels. However, alteration of the track width by changing the hub to rim relationship using centres 95 is not possible in the field and is a workshop or yard job.

Figure 9 shows the tractor in schematic outline during a steering movement. The rotated disposition of the rear frame 3 relative to the front frame 2 will be clearly seen, and it will also be seen that the inner wheels 20 and 50 follow a substantially common track 106 while the outer wheels 21 and 51 also follow a substantially common track 107. The axes of the front and rear wheels are substantially equidistantly located from the central vertical steering axis, so that this common track is achieved. Pivoting of the arms alters this relationship to some degree but the tracking remains close, even in a pivoted disposition of the wheels. This feature of the tractor according to the invention is of particular advantage in making turning movements in fields where crops are growing, as destruction of the crop is substantially minimised. Figure 10 shows the relative dispositions of the front and rear frames when the tractor is operating on uneven ground. Wheels 20 and 21 are running on a substantially level surface 108 while wheels 50 and 51 are running on an inclined surface 109. Relative twisting of the tractor frames about horizontal axis 4 allows the tractor to operate satisfactorily in such conditions.

Figure 11 is a schematic hydraulic circuit diagram for the tractor of the invention. Engine 110 is of 98 horse power, turbocharged and air cooled. It is housed under the engine cover 159 of the tractor. A splitter unit 111 is mounted on the rear of the engine in place of the customary bell housing for a mechanical drive. Engine 110 is connected to splitter 111 by shaft 112. The unit 111 has three output shafts 116, 117 and 118, driving respective swash plate pumps 113, 114 and 115. Each pump has a maximum potential power output of 70 horse power. The pumps 113 and 114 drive hydrostatic motors 126, 127, 128 and 129 mounted in the wheels 20, 51, 21 and 50 respectively of the tractor. It will accordingly be seen that pump 113 drives the right hand side front wheel and the left hand side rear wheel considered with respect to the direction of normal forward travel of the tractor, while pump 114 drives the left front wheel and the right hand rear wheel, similarly considered. The wheel supply pumps 113 and 114 are controlled by a single cab mounted lever 120 through a common linkage 119, so that the outputs of these pumps are matched. Accordingly four wheel drive of the tractor of the invention is provided, and as all of the wheels are of the same size, the torque may be substantially equalised between the various wheels. Pump output control is conventional, the pump outputs being varied by alteration of swash plate angle.

Since each wheel is individually mounted on a respective pivot arm, no differential gear units are provided, as there are no transverse axles extending across the width of the tractor. However in order to permit the inner wheels to rotate more slowly than the outer wheels during steering movements, exchange or proportional valves 135 and 136 are provided in each of the wheel drive hydraulic circuits, for allowing flow of oil from each circuit to a reservoir 139 through a drain line 137, in the event of an imbalance between the wheels, such as is generated during the steering movement, or the occurrence of an excess hydraulic pressure in the circuit. Hydraulic fluid passing through the drain line 137 is conducted through a fan driven oil cooler 138 before entering the reservoir 139. Oil is drawn to the pumps 113, 114 and 115 from the reservoir 139 as required, through a line 144.

The pumps 113 and 114 are controlled through linkage 119 and respective servo valve systems 121 and 122. Accordingly the amount of force required to operate lever 120 is relatively small as the servo systems apply the actual deflecting forces to the swash plates of the pumps. Lines 131 and 132 and 133 and 134 connect the pumps 113 and 114 respectively with their appropriate pairs of motors. For forward motion fluid under pressure is directed through lines 131 and 133 and fluid return takes place through lines 132 and 134, while for backwards or reverse movement of the tractor the fluid flows first through lines 132 and 134 and returns to the pumps through lines 131 and 133. The exchange valves 135 and 136 function for either direction of fluid flow and accordingly differential inner and outer wheel speeds are provided for in either direction of motion.

The pump 115 is controlled by a lever 124 through a linkage 123 and a servo valve control system 125. Pump 115 supplies fluid to a hydraulic motor 141, which is of fixed displacement and generates up to 70 horse power. The motor output is transmitted by a shaft to a gear box 142, which has a reduction ratio of 3.18:1 and provides a final power take-off output, governed to rotate at a constant 540 r.p.m., substantially regardless of the torque load on it. The drive is reversible as for the wheel motors. An exchange valve 143 housed in this case within the actual motor unit, relieves any excess pressure which may come about, for example, in the event of seizure of apparatus to which the power take-off is connected. Accordingly damage to the pump and drive may be prevented. The pump 141 and gearbox 142 together substantially define the hydrostatic power take-off drive 49.

The pump servo valve control lever 124 is preferably a hand lever with a suitable arrangement such a notched sector plate with a co-operating engagement spigot for locking the lever in a selected position, but a pedal type control may also be provided, either in addition or as an alternative. In one such arrangement, the manual lever may allow a particular pump setting to be chosen and the pumps to be locked in that setting, while the pedal control provides a rapid override by for example a kickdown feature, in the event that a sudden change in operating circumstances occurs requiring corrective action by the operator.

On the opposite side of the engine from the splitter 111, a steering pump 145 and a services pump 155 are mounted, these being either direct driven from the engine crankshaft, or driven through gearing. The steering pump 145 feeds, through a feed line 147, a steering control valve 146 operated by the steering wheel 17. Further control lines not designated individually, feed fluid from the valve 146, as directed by steering wheel movements, to the steering rams 99 and 100. A drain line 148 leads from the control valve 146 to a reservoir 149, from which the pump 145 draws its supply.

Alternative positions for the steering and services pump may also be provided. Where the hydraulic swash plate pumps are provided with straight through drive shafts, these auxiliary pumps may, for example, be mounted on the free ends of these through drive shafts.

A low pressure tapping line 150 leads from a low pressure outlet 163 on pump 115 to wheel motor displacement setting valves 151 and 152, which apply control signals through lines 153 or 154 to the front and rear wheel motors in pairs respectively, to set the motors in their high displacement configuration or in their low displacement configuration as required. The control signal pressure transmitted through these lines is approximately 7 p.s.i.  A variety of settings are accordingly available.  Both front and rear wheels can be set to high displacement or both may be set to low displacement.  Alternatively the front wheels can be in high displacement and the rear wheels in low, or the front wheels in low and the rear wheels in high, and these alternative arrangements offer individual specific advantages, depending on the particular purpose for which the tractor is being used, to offset, for example, weight transfer problems when operating at high torques.  The hydrostatic wheel motors most suitably have five pistons and five cam lobes on the rotor of the motor.  The variable displacement feature is obained by altering the displacement of the pistons by means of a pulse signal applied to displacement changing pistons of the motors.

The services pump 155 supplies all the other equipment for which a hydraulic fluid pressure source is needed.  The wheel displacement rams 31 and 32 and 61 and 62 are all controlled for simultaneous action by valve 156.  Valve 157 controls the three point linkage rams 88 and 89.  An external services control valve 158 controls the fluid supply to the external services points 90 on the rear plate 42.  The arrangement is such that only one of these functions controlled by these three valves 156, 157 and 158 may be activated at any one time.  However this is not generally disadvantageous, as simultaneous operation or activation of these features is neither necessary nor desirable in the great majority of circumstances.  Additional services control valves may allow further external units to be associated with the tractor.

The valves 156, 157 and 158 may be solenoid controlled or cable controlled from the console at the driving position.  Direct operation of these valves is feasible, but is not permissible where regulations prohibit hydraulic hoses from passing through driving cabs.

The four wheels of the tractor according to the invention are provided with individual brakes, also operated from the driving position. The rear brakes may be hydraulic and the front brakes manual. Individual control of the braking of each wheel is provided, so that slipping of any one wheel can be corrected by a suitable operation of the brake for that wheel. While the hydraulic drive affords a very powerful and responsive control over the tractor drive, to the extent that in many instances slowing and control of the tractor on gradients can readily be accomplished merely by appropriate adjustment of the hydraulic pump settings, brakes are of course a legal requirement for use on the public road. The brake arrangement described may be varied as required, for example, by providing both hydraulic and manual brakes on each wheel or by altering the braking combinations between the different wheel pairs. Because all of the wheels are driven, a radar drive for an acremeter, where provided, is most suitable rather a wheel-associated drive.

Engine speed is controlled by a pedal operated throttle in the normal way. However because both the final drive and the power take-off are transmitted through hydraulic pumps and motors, the speeds of the hydrostatic wheel motors and the power take-off drive are not directly determined by engine speed. Accordingly where only a low torque is required, the engine speed may be comparatively low, and the engine only requires to be speeded up when a higher torque is needed either at the wheels or at the power take-off. In a conventional tractor with a mechanical power take-off drive, the engine must be run at a speed sufficient to keep the PTO shaft turning at the standard 540 r.p.m., even when only a small torque is required, as for example when operating a spray unit. This unnecessary, for power output purposes, speeding of the engine has an undesirable impact on fuel economy, and is avoided in the tractor of the invention, were PTO shaft speed is independent of engine speed. Accordingly the tractor of the invention is economical in its consumption of fuel, as engine power output is matched more closely to power demand than may be achieved in conventional tractors. The various hydraulic units are also comparatively oversized relative to the engine, thus providing a very adequate margin of power against unequal loading both as between individual wheels and also between the wheel drive and the power take-off drive. Operation of the tractor according to the invention is relatively simple, the engine throttle and the swash plate pump settings being varied in combination to achieve the desired speed and torque outputs. Operation of the service pump valves may be either in an on or off only mode, in the event of solenoid control, or the valves may be more sensitively adjustable, where a cable connection is provided, so that the valve may be cracked open to precisely the desired degree, to allow creeping advance or contraction of the various hydraulic rams.

As described in relation to the present embodiment, the front and rear frames of the tractor are of dissimilar configuration. However, in an alternative construction, the frames may be substantially identical, thus facilitating economy and convenience in manufacture. The extensible construction of rear frame described allows the carrying capacity of the tractor to be optimised, in that the frame can be extended to carry a bulky but light product and shortened to carry a more concentrated or denser material. Extension and contraction of the frame may be carried out by a hydraulic ram under cab control rather than manually from the ground as described in relation to the present construction. For some purposes it may be desirable to remove the telescopic outer rear end section of the rear frame completely, so as to mount or accommodate an alternative piece of ancillary equipment. Alternative quick connection points for the hydraulic lines, for feed of such equipment, may then be provided closer to the cab than the points 90. When the tractor is to be used with an implement, it is preferred for the frame to be at its shortest length, especially when the implement is to be attached to the three point linkage, so as minimise the overhanging load at the rear end of the tractor. Electronic draught control is preferably provided when the implement fitted is a plough, so as to maintain the plough at a constant level during ploughing.

On account of the use of hydraulic drive and an articulated frame structure with box section frame members, the tractor according to the invention is relatively light having regard to its capabilities. Typical ground loadings achieved with it are of the order of 21 to 24 KN/m$^2$ (3 to 3½ lbs/in$^2$), as compared with typical values of 48 KN/m$^2$ (7 lbs/in$^2$) for conventional tractors. Accordingly it can operate satisfactorily in difficult ground conditions, and the flexibility of the hydraulic drive and braking control allows slipping of the wheels to be overcome even in such conditions. The use of wheels of equal diameter allows the loading on each wheel to be substantially equalised, while the arrangement of the power unit and other drive features also favours good weight distribution as between the front and rear wheels, in particular when the tractor is in a loaded condition. The carrying capacity on the rear of the tractor is approximately 2½ tonnes, which may be either on the rear linkage or on the platform 91 or divided between the two as, for example, when a spray unit or spreader is mounted on the rear and the tank or hopper for the unit is supported on the platform.

The tractor of the invention can run at up to 40 Km/hr (25 mph) in four wheel drive, and higher speeds are possible if two of the drive motors are isolated, for which suitable valves may be provided. On account of the hydraulic drive, it can travel equally fast backwards as it can in a forwards direction, although it would not normally be used at such speeds in this way. However, the turntable driver's seat mounting allows excellent driver supervision of any reverse movements and of the functioning of rear-mounted equipment.

CLAIMS

1. A tractor (1) having a frame (2,3) and three or more wheels (20,21,50,51), each wheel being driven by a hydrostatic motor (126,128,129,127) and being mounted on an arm (23,24,53,54) which is pivotable relative to the frame, the tractor having a power unit (111) driving two or more pumps (113,114,115,145,155) for supplying hydraulic fluid under pressure, at least one (113) of said pumps being a drive pump for supplying hydraulic fluid under pressure to two (126,127) of said wheel motors in parallel, a hydraulic piston and cylinder device (31,32,61,62) being mounted between the frame and each of said pivotable arms (23,24,53,54) on which the wheels are mounted, one of the cylinder and piston of said device being associated with the frame and the other of the cylinder and piston of the device being associated with said pivotable arm, and another (155) of said pumps being an auxiliary pump selectively connectible to said piston and cylinder devices (31,32,61,62) so that each said device may be activated to pivot a respective said arm (23,24,53,54) relative to the frame independently of the supply of hydraulic fluid to said wheel motors (126,128,129,127) and thus vary the disposition of the wheel (20,21,50,51) mounted on said arm relative to the frame.

2. A tractor according to claim 1, wherein a valve (136) is provided for directing hydraulic fluid from a high pressure supply line supplying said two motors (126,127) in parallel to a reservoir (138) for hydraulic fluid in the event of a speed difference between the motors or an excess hydraulic fluid pressure.

3. A tractor according to claim 1 or claim 2, having four wheels (20,21,50,51) and two drive pumps (113,114), each drive pump (113,114) supplying hydraulic fluid to two - (126,127;128,129) of said wheel motors in parallel, one of the

0136910

-32-

two wheels driven by said two wheel motors in parallel being a
front wheel (20,21) considered relative to the normal direction
of travel of the tractor and the other (50,51) of said wheels
similarly considered being a rear wheel.

4. A tractor according to any preceding claim, wherein valve
means (156) are provided for simultaneously connecting said
auxiliary pump (155) to all of said piston and cylinder
devices (31,32,61,62) so that all of said arms are pivoted at
the same time.

5. A tractor according to any preceding claim, comprising
load-carrying means (91) delimiting at least in part a
load-accommodating space or volume, wherein the load-carrying
means is mounted on an extensible frame portion (45,46) which
is displaceable relative to the remainder of the frame so that
said load-accommodating space or volume may be varied in size.

6. A tractor according to any preceding claim, wherein each
pivotable arm (23,24,53,54) is mounted on a mounting member
(25,26,55,56) displaceable relative to the frame in a direction
substantially parallel to the axis of rotation of the wheel
mounted on said arm, and means (27,28,57,58) are provided for
locating the mounting member in a selected one of a plurality
of positions relative to the frame and substantially locking
the member in said position relative to the frame so that when
thus locked it cannot be further displaced relative to the
frame without releasing said means.

7. A tractor according to any preceding claim, wherein each of
the pivotable arms (23,24,53,54) extends from the frame in the
same direction relative to the direction of travel of the
tractor and the dimension between the point (35,36,65,66) of
pivoting of the arm relative to the frame and the axis of the
wheel (20,21,50,51) mounted on said arm is the same for each
arm, so that the tractor wheelbase (A) may remain substantially
constant when each arm is in the same pivoted disposition relative to the frame.

8. A tractor according to any preceding claim, wherein the frame has a front part (2) and a rear part (3) and is articulated for relative rotation between the front frame part and the rear frame part about a substantially vertical axis (5), at least one hydraulic piston and cylinder device (99,100) being mounted between said front and rear frame parts, the cylinder portion of said device being associated with one (2) of said frame parts and the piston portion of the device being associated with the other frame part (3) so that said device may be activated to pivot one frame part relative to the other and constrain the wheel or wheels (20,21) of the one frame part (2) to follow an instantaneous path differing from that or those (50,51) of the other frame part.

9. A tractor according to claim 8, wherein said front frame part (2) and said rear frame part (3) are also relatively rotatable about a substantially horizontal axis (4) extending substantially in the direction of travel of the tractor, so that relative twisting of the frame parts may take place.

10. A tractor according to any preceding claim, wherein each wheel (20,21,50,51) has braking means and individual control means are provided for each said braking means so that the braking force applied to each wheel may be controlled independently of the braking forces applied to others of the wheels.

1/6

FIG.1

FIG.2

FIG. 3.

FIG. 4.

FIG. 5

FIG. 6

FIG.7

FIG.8

0136910

FIG. 9

FIG. 10

FIG. 11